# EUROPÄISCHE PATENTSCHRIFT

(11) **EP 3 916 452 B1**
(45) Veröffentlichungstag und Bekanntmachung des Hinweises auf die Patenterteilung: **17.09.2025**
(21) Anmeldenummer: 20177470.0
(22) Anmeldetag: 29.05.2020
(51) Int. Cl.: G02B 6/44

(54) **SCHRÄGE STÜTZE FÜR SCHWENKMODUL**
INCLINED SUPPORT FOR SWIVEL MODULE
SUPPORT INCLINÉ POUR UN MODULE PIVOTANT

(43) Veröffentlichungstag der Anmeldung: 01.12.2021
(73) Patentinhaber: Hauff-Technik GRIDCOM GmbH, 73494 Rosenberg (DE)
(72) Erfinder: HAMMER, Ralf, 73489 Jagstzell (DE)
(74) Vertreter: Szynka Smorodin Patentanwälte Partnerschaft mbB

(56) Entgegenhaltungen:
- DE-T2- 69 521 305
- US-A- 5 100 221
- US-A- 5 655 044
- US-B2- 10 082 634

## Beschreibung

Die Erfindung betrifft einen Stapel von Spleißmodulen für Lichtwellenleiterkabel ("LWL-Kabel"). Solche Lichtwellenleiterkabel sind auch als Glasfaserkabel bekannt.

LWL-Kabel dienen zur Signalübertragung mit hohen Übertragungsraten und/oder hoher räumlicher Reichweite und finden immer stärkeren Einsatz. Insbesondere werden zunehmend die LWL-Kabelnetze bis zum Verbraucher verlegt oder sogar bis zum Endgerät im Haushalt oder Büro. Mit dem Ausbau der LWL-Kabelnetze stellt sich immer häufiger die Aufgabe der Verbindung von LWL-Kabeln untereinander.

Dabei werden die einzelnen Fasern mit einer an sich bekannten Technologie aneinandergefügt und diese sogenannten Spleiß- und Patchstellen in ebenfalls an sich bekannter Weise geordnet sowie zugänglich und geschützt untergebracht. Man spricht von Spleißmodulen, in denen typischerweise eine Mehrzahl (z. B. zwölf oder eine Vielzahl von zwölf) Glasfasern in Kabeln mit jeweils einer einzelnen Glasfaser in jeweiligen Spleißkassetten gespleißt sind und mit kurzen Anschlusskabeln (Pigtails) auf Abschlusselemente (etwa Stecker und Kupplungen) geführt werden. Dort können dann zur Weiterführung der Glasfaserverbindungen LWL-Kabel mit Verbindungselementen (etwa Steckern), insbesondere Patchkabel, eingesetzt werden. Im Folgenden bezieht sich der Begriff des LWL-Kabels also auf einen Kabeltyp im Bereich eines solchen Spleißmoduls und nicht auf ein bspw. unter einer Straße vergrabenes "Glasfaserkabel" mit einem dicken und vielfältigen Bündel einzelner Fasern.

Zur Zugänglichkeit zu den einzelnen Spleiß- und Patchstellen verfügen bekannte Spleißmodule typischerweise über einen bewegten schubladenähnlichen Auszug und eine ortsfeste Halterung. Bei besonderen Varianten ist der Auszug nicht translatorisch auszuziehen, sondern um eine Schwenkachse, typischerweise in der Nähe der Ecke der Halterung, aufschwenkbar. Im Folgenden wird diesbezüglich von einem Schwenkmodul gesprochen (also quasi einer Drehlade anstelle einer Schublade). Beispielhaft kann verwiesen werden auf die EP 2 221 650 A1.

Die translatorischen Schubladenbewegungen führen zu Bewegungen der sogenannten Patchkabel, die an die Verbindungselemente der Anschlussfasern angeschlossen sind. Solche Bewegungen können zu unerwünschten Zugbelastungen oder Biegebelastungen einzelner LWL-Kabel (Patchkabel) führen. Dabei ist insbesondere zu berücksichtigen, dass die LWL-Kabel zur Vermeidung unerwünschter Verluste bestimmte Biegeradien nicht unterschreiten sollen. Dementsprechend sind im Stand der Technik bereits Führungskonstruktionen bekannt, in denen die betroffenen Patchkabel beim translatorischen Ausziehen oder Hineinschieben einer Schublade von Elementen gestützt werden, die typischerweise mit der halben Geschwindigkeit der Schublade, also übersetzt, mitbewegt werden.

Ferner wird verwiesen auf die EP 3 511 753 A1, die sich mit einer verbesserten Patchkabelführung für Schwenkmodule befasst. Dabei werden LWL-Kabel von einer Führung, die im Wesentlichen den Kabelverlauf im schwenkachsennächsten Bereich an den Schwenkmodulen bestimmt, in eine S-Form gebracht. Schädliche Auswirkungen der Schwenkbewegungen der Schwenkmodule auf weiter entfernt liegende Kabelbereiche werden insoweit reduziert.

Die US 10 082 634 B2 zeigt Ablagemodule mit je einer schwenkbaren Ablage zur Montage innerhalb eines Gehäuses. Das Gehäuse zeigt eine Aussparung mit einer aus der Aussparung heruntergeklappten Stufe, welche Aussparung einen Vorsprung des Spleißmoduls aufnehmen kann.

Die DE 695 21 305 T2 zeigt ein Gehäuse mit mehreren schwenkbaren Auszügen, wobei ein Clip am Rand jedes Auszugs nahe der hinteren Speicherposition angeordnet ist. Der Clip übt einen stabilen Presssitz auf zwei am Gehäuse angeordnete Klammern aus. Das liegt dem Oberbegriff des Anspruchs 1 zugrunde.

Die US 5 100 221 A zeigt ein Verteilersystem mit einem Gehäuse und mehrere schwenkbare Ablagen. An der Vorderkante der jeweiligen Seitenwände des Gehäuses sind Schwenklagervorsprünge angeordnet, die entweder eine Schwenkachse bilden können oder zwei Schwenkflansche der jeweiligen Ablagen in der eingeschwenkten Position aufnehmen können.

Die US 5 655 044 A zeigt ein Kassettenmodul mit mehreren schwenkbaren Kassetten, die jeweils an einer Achse angeordnet sind. Eine Klemme ist auf einer jeweiligen Seite der Kassette angeordnet, welche gegenüber der Schwenkverbindung positioniert ist. Die Klemme kann in eine zweite Achse beim Einschwenken einrasten.

Auf der Grundlage des geschilderten Standes der Technik liegt der vorliegenden Erfindung die Aufgabe zugrunde, eine hinsichtlich Spleißmodulstapeln mit aufschwenkbaren einzelnen Modulen weiter verbesserte Lösung anzugeben.

Zur Lösung dieser Aufgabe richtet sich die Erfindung auf einen Spleißmodulstapel nach Anspruch 1.

Die Erfindung geht dabei von der Überlegung aus, bei einschlägigen Stapeln schwenkbarer Spleißmodule nicht nur auf eine optimierte Kabelführung zu achten, sondern auch auf eine gewisse Führung der Schwenkbewegungen der Spleißmodule selbst. Diese sind, wie bereits ausgeführt, um eine Schwenkachse herum beweglich und können damit aus einem Gehäuse heraus geschwenkt werden. Zur effizienten Raumnutzung ist es dabei von Interesse, die einzelnen Spleißmodule in der vertikalen Richtung der Schwenkachse möglichst flach auszuführen. Andererseits liegt es in der Natur einer Schwenkbewegung, dass nicht (wie bei translatorisch beweglichen Schubladen) eine gelenkige Führung an entgegengesetzten Seiten, also sozusagen eine zweite stützende Schwenkachse, möglich ist. Auch wenn die mechanische Verbindung der einzelnen Spleißmodule mit dem Schwenkachsengelenk selbst natürlich Gegenstand von Verbesserungen sein kann, bleibt dennoch bei abnehmender vertikaler Höhe ein ungünstiger werdendes Hebelverhältnis der schwenkachsenfernen Teile der Spleißmodule zu der Schwenkachsengelenkhöhe selbst.

Erfindungsgemäß ist daher eine ein jeweiliges Schwenkmodul stützende Klinke innen an dem Gehäuse vorgesehen, und zwar an einer zweiten Seite innen an dem Gehäuse, die zu der ersten Seite der Vorderseite des Gehäuses entgegengesetzt ist, an der seitlich die Schwenkachse angebracht ist. Damit kann die Klinke schwenkachsenferne Teile des Schwenkmoduls stützen, und zwar indem dieses über die Klinke läuft. Gleichzeitig soll es dabei aber keine feste Verbindung zwischen der Klinke und dem Schwenkmodul geben, sondern diese gleiten (oder rollen) aneinander entlang oder übereinander. Die Stützung muss auch nicht für den gesamten Schwenkbereich relevant sein. Beispielsweise kann es grundsätzlich auch von Interesse sein, das Spleißmodul vor allem im ausgeschwenkten Zustand in bestimmten Positionen zu stützen, nämlich in solchen Positionen, in denen daran/darin gearbeitet werden soll und insoweit mechanische Belastungen auftreten können. Schließlich ist festzustellen, dass die Stützung bzw. der Kontakt zwischen der Klinke und dem Spleißmodul nicht zwingend im normalen Bewegungsfall ohne besondere Beanspruchung, also ohne besondere vertikale Kräfte an dem Spleißmodul, wirklich vorliegt. Die Klinke könnte z. B. auch so angeordnet werden, dass sie das Spleißmodul erst ab einer gewissen geringen Verbiegung desselben aus der normalen Lage heraus berührt und stützt.

Jedenfalls erlaubt die Erfindung je nach individuellem Wunsch einen robusteren Umgang mit den Spleißmodulen, eine flache Ausgestaltung derselben, gewisse Freiheiten bei der Konstruktion der Schwenkachsengelenke und/oder eine höhere Zuverlässigkeit des Spleißmoduls und des ganzen Stapels.

Im Rahmen einer möglichst flachen Gestaltung auch des gesamten Spleißmodulstapels ist es von Vorteil, zwischen den (eingeschwenkten) Spleißmodulen innerhalb des Stapels keine durchgehenden Zwischenböden vorzusehen, also gewissermaßen nicht jedem Spleißmodul ein eigenes Gehäuse zu geben. Stattdessen ist das Gehäuse zwischen den Spleißmodulen offen. Damit können Bauhöhenvorteile erzielt werden, müssen solche Zwischenböden nicht an möglicherweise individuelle nach unten oder nach oben besonders hervorstehende Bauteile des oberen bzw. des unteren Spleißmoduls angepasst werden, wird Material gespart und kann mithilfe der erfindungsgemäßen Klinke trotzdem eine zielgerichtete Abstützung erfolgen.

Erfindungsgemäß weist das Spleißmodul eine speziell zum leichten Auflaufen auf die Klinke vorgesehene Struktur auf, nämlich eine Schräge oder ein Rollelement (ein Rad, eine Walze etc.). Diese Struktur befindet sich an einer Rückseite (bezogen auf die im eingeschränkten Zustand des Spleißmoduls nach vorne, zur offenen Seite des Gehäuses, orientierte Vorderseite des Spleißmoduls). Bei einer Schräge rutscht das Spleißmodul auf die Klinke gleitend auf, bei einem Rolleelement kann dies zunächst gegen eine Kante (oder auch eine Schräge) seitens der Klinke anlaufen, wobei die Achse dabei vorzugsweise bereits über der vertikalen Lage des ersten Kontakts liegt. Dann funktioniert das Rollelement ähnlich einer Schräge, allerdings mit geringerer Reibung. Die Klinke wiederum ist erfindungsgemäß in ihrem mit dem Spleißmodul interagierenden Bereich flach und horizontal ausgestaltet, weist also vorzugsweise dort keine (weitere) Schräge auf. Damit kann die Klinke möglichst flach und damit insgesamt platzsparend ausgeführt werden, wogegen die Rückseite des Spleißmoduls in vielen Fällen in der horizontalen Richtung noch Spielraum für z. B. eine entsprechende Schräge bietet.

Die beschriebene Klinke kann natürlich mehrfach übereinander und dann jeweils benachbarten Spleißmodulen zugeordnet vorgesehen sein. Insbesondere gibt es vorzugsweise für jedes Spleißmodul in einem gemeinsam in dem Gehäuse untergebrachten Stapel mit (optionaler) Ausnahme des untersten Spleißmoduls je eine Klinke. Das unterste Spleißmodul kann sich gegebenenfalls auch auf dem Boden des Gehäuses abstützen. Die übereinanderliegenden Klinken können dabei z. B. paarweise zu einheitlichen Bauteilen zusammengefasst sein, die in einer horizontalen Blickrichtung von vorn z. B. ähnlich einem liegenden U-Profil ausgestaltet sein können. Es sind also zwei übereinanderliegende Klinken durch eine vertikale Wand verbunden, von der sie jeweils als U-Schenkel abstehen.

Ferner kann eine weitere Stützeinrichtung für ein Spleißmodul vorgesehen sein, und zwar an der Rückseite des Gehäuses (wobei die Vorderseite diejenige offene Seite des Gehäuses ist, durch welche die Spleißmodule ein- und ausgeschwenkt werden). An der Gehäuserückseite kann dementsprechend innen eine Stufe angeordnet sein, und zwar vorzugsweise ebenfalls eher an der zu der Schwenkachse entgegengesetzten Gehäuseseite als an der der Schwenkachse benachbarten. Diese Stufe dient dazu, das Spleißmodul in der eingeschwenkten Position dann zu stützen, wenn dieses beim Einschwenken gegen und auf die Stufe läuft. Insbesondere kann diese Stufe das Spleißmodul in der eingeschwenkten Position zusätzlich zu der Klinke vertikal justieren.

Die Stufe liegt in Bezug auf die Quererstreckung der Gehäuserückwand vorzugsweise innerhalb der von der Schwenkachse entferntesten 30 % oder sogar 25 % oder 20 %, vgl. das Ausführungsbeispiel.

Auch im Zusammenhang mit dieser Stufe ist eine Schräge oder ein Rollelement bevorzugt, um das Auflaufen zu erleichtern. In diesem Fall ist vorzugsweise an der Stufe selbst eine solche Schräge oder ein Rollelement vorgesehen, wobei vorzugsweise eine Wechselwirkung mit einem weiteren Rollelement oder einer weiteren Schräge an der Rückseite des Spleißmoduls entsteht. Letztere ist wiederum vorzugsweise die gleiche Schräge oder das gleiche Rollelement wie das bereits in Zusammenhang mit der Klinke beschriebene. Im Ausführungsbeispiel wird dies für eine rückseitige Schräge an dem Spleißmodul und eine schräge Stufe näher erläutert.

Die erfindungsgemäße Stufe an der Gehäuserückwand kann zu einer Kabelführungseinrichtung für in dem Gehäuse zu verlegende LWL-Kabel ausgestaltet sein, insbesondere für quer zu der vertikalen Schwenkachsenrichtung verlaufende Kabel. Insbesondere können die erwähnte Schräge einerseits und eine stützen dafür (unter oder hinter der Schräge) bildende Wände ein solches quer verlaufendes Kabel oder ein Bündel zusammen mit der Gehäuserückwand umschließen.

Im Folgenden wird die Erfindung anhand eines Ausführungsbeispiels näher beschrieben, dessen einzelne Merkmale im Rahmen der Ansprüche auch in anderen Kombinationen wesentlich sein können.

Es zeigt:
- Figur 1: eine perspektivische Darstellung eines vereinfachten Spleißmoduls,
- Figur 2: einen Ausschnitt B aus Figur 1 vergrößert,
- Figur 3: eine perspektivische Darstellung von Teilen eines erfindungsgemäßen Spleißmodulstapels und
- Figur 4: eine Seitenansicht des Spleißmodulstapels aus Figur 3.

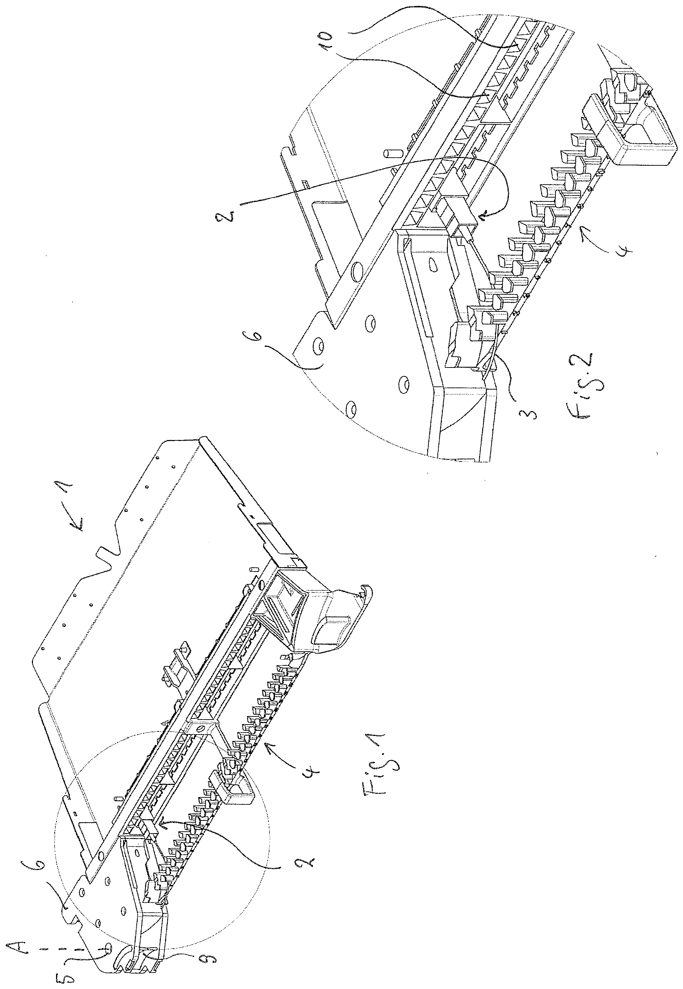

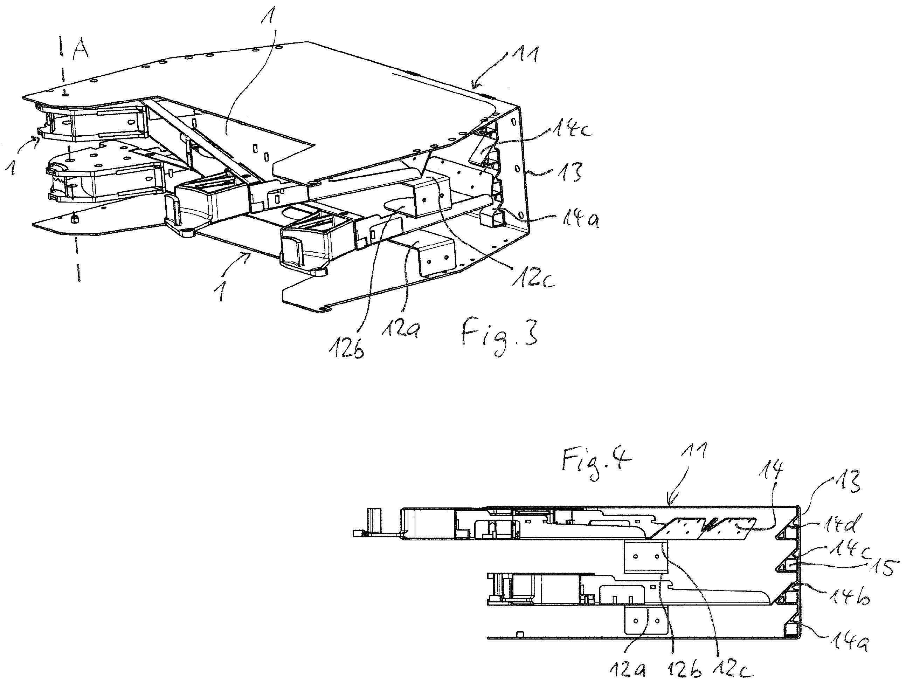

Zunächst wird zum Verständnis des Gesamtzusammenhangs auf die beiden bereits zitierten Dokumente EP 2 221 650 A1 und EP 3 511 753 A1 oder auch die EP 3 528 023 A1 verwiesen. Insbesondere zeigen die Figuren 1 und 3 in der erstgenannten einen einschlägigen Verteilerschrank mit einer Mehrzahl Spleißmodulstapel und zeigt die Figur 2 dort einen solchen Spleißmodulstapel mit rechts vorne liegender Schwenkachse A. In dem zweitgenannten Zitat sieht man den Verteilerschrank in Figur 8 und einen Spleißmodulstapel mit ebenfalls rechts vorne liegender Schwenkachse A in Figur 7. Figur 6 dort zeigt ein einzelnes schwenkbares Spleißmodul aus dem Stapel mit vorne liegenden steckbaren Patchstellen und dahinter zwei vertikalen Stapeln aus einer Vielzahl Spleißkassetten, die jeweils eine Mehrzahl Spleißstellenablagen enthalten.

Figur 1 der vorliegenden Anmeldung entspricht weitgehend dieser zuletzt beschriebenen Figur 6, wobei allerdings die Schwenkachse A diesmal links vorne liegt. Das dargestellte Spleißmodul 1 ist zur Vereinfachung ohne Spleißstellenablagen, d. h. ohne die einschlägigen Spleißkassetten gezeigt, die man sich aber analog zu der Figur 6 in der EP 3 511 753 A1 hinzudenken kann.

Im Übrigen zeigt Figur 1 (und natürlich auch die Vergrößerung des Bereichs B in Figur 2) eine steckbare Patchstelle 2, wobei die Figuren bereits veranschaulichen, dass tatsächlich (statt der einen dargestellten Patchstelle 2) 24 (nämlich 4 × 6) davon nebeneinander vorgesehen werden können. Man erkennt ferner, dass ein aus einer solchen steckbaren Patchstelle 2 herausführendes einzelnes Glasfaserkabel 3 durch den Patchstellen 2 vorgelagerte Reihen 4 von Führungsstiften hindurchgeführt ist und davor dann nach links in Richtung zur Schwenkachse A weiterläuft. Zur Verdeutlichung der Struktur des Spleißmoduls ist das Glasfaserkabel 3 in der Darstellung hier allerdings abgeschnitten.

Weiterhin zeigt das Spleißmodul 1 aus den Figuren 1 und 2 über der eingezeichneten Patchstelle 2 eine Reihe untereinander gleicher Öffnungen, und zwar in einer 1:1-Zuordnung zu den Patchstellen 2. Hierzu kann zum technischen Hintergrund zunächst verwiesen werden auf die EP 3 528 023 A1 der selben Anmelderin, vergleiche dort die Öffnungen 19 und die zugehörigen Steckelemente 14 in den Figuren 7 ff. Es geht hierbei um alternative Öffnungen für Patchstellen 2, und zwar für nicht aufzutrennende, also durchgehende Glasfaserkabel.

Man kann sich anhand Figur 1 die weiter oben in der Beschreibung bereits erwähnten Hebelverhältnisse zwischen der lateralen Ausdehnung des Spleißmoduls 1 (vor allem in der Querrichtung, also in Figur 1 von hinten links nach vorne rechts) und der Höhe der Abstützung an der Schwenkachse A vorstellen. Das gilt vor allem dann, wenn bei herausgeschwenktem Spleißmodul daran gearbeitet wird, also z. B. Kabel verlegt oder an Spleißstellen gearbeitet wird.

Figur 3 zeigt dementsprechend ein Gehäuse 11 des Spleißmodulstapels mit zwei von insgesamt vier darin montierten Spleißmodulen 1, die zur Verdeutlichung jeweils nicht vollständig dargestellt sind. Das obere der beiden dargestellten Spleißmodule 1 ist leicht ausgeschwenkt, dass untere ganz eingeschwenkt. Zur besseren Verdeutlichung der Erfindung sind außerdem die beiden Seitenwände des Gehäuses 11 weggelassen.

Ergänzend zu dieser perspektivischen Darstellung gibt es eine Seitenansicht in Figur 4, erneut mit weggelassenen Satz Seitenwänden und nur zwei der insgesamt vier Spleißmodule 1. In beiden Figuren erkennt man an der in Figur 3 nach rechts vorn weisenden (und damit rechten, schwenkachsenfernen) Seitenwand befestigte Klinken 12 a bis c. Dabei handelt sich zunächst, wie vor allem Figur 3 für die Klinke 12 b zeigt, um horizontale flache Blechstreifen, die von der rechten Seitenwand nach links in den Raum in dem Gehäuse 11 zwischen den benachbarten Spleißmodulen 1 hineinragen. Sie haben dabei eine abgerundete distale Seite und gehen an der proximalen Seite rechtwinklig in ein der Befestigung an der Seitenwand dienendes Blechstück über. Im Fall der oberen beiden Klinken 12 b und c bilden diese mit einem gemeinsamen solchen Befestigungs-Blechstück ein U-förmiges Paar. Im Fall der unteren Klinke 12 a gibt es keinen Kombinationspartner, und zwar wegen des Gehäusebodens. Damit handelt es sich statt des U-Profils um ein L-Profil. In diesem Sinn gibt es hier also drei Klinken 12 a bis c für letztlich vier Spleißmodule 1.

Die Hinterseiten, also die der in den Figuren eingezeichneten Rückwand 13 des Gehäuses 11 zugewandten Seiten der Spleißmodule 1, sind unter einem Winkel von etwa 45° angeschrägt, wobei der entsprechende schräge Abschnitt der jeweiligen Spleißmodul-Trägerplatte mit 14 bezeichnet ist. Er ist besonders gut in Figur 4 oben für das oberste Spleißmodul 1 erkennbar. Mit diesem schrägen Abschnitt 14 kann ein Spleißmodul 1 beim Einschwenken leicht über die entsprechende Klinke 12 geführt werden, wenn es z. B. aufgrund einer relativ hohen Position der Klinke 12 oder einer leichten Verbiegung des Spleißmoduls 1 aus der horizontalen Ausrichtung heraus auf der entsprechenden Höhe eingeführt wird.

Man erkennt in Figur 3 weiterhin, dass die Klinken 12 a bis c auch weiter links vorn an der nicht gezeichneten Seitenwand angebracht sein könnten. Dann müssten sie allerdings möglicherweise etwas länger (in der Richtung zu der Schwenkachse A) ausgeführt sein, weil die entsprechende seitliche Begrenzung der Spleißmodule 1 beim Herausschwenken gedreht wird und sich daher von der Ebene der Seitenwand zurückzieht.

Ferner erkennt man an der Rückwand 13 des Gehäuses 11 eine Reihe von vier übereinander angeordneten Stufen 14 a bis d, jeweils eine für jedes Spleißmodul 1. Diese Reihe befindet sich deutlich näher bei der rechten Seitenwand als bei der linken (in Bezug auf die Erstreckung der Rückwand 13 in Querrichtung in einem Abstand von ungefähr 15 % zur rechten und etwa 85 % zur linken Seitenwand). Eine weitere analoge Stufenreihe gibt es ungefähr in der Mitte der Rückwand 13, wie Figur 3 andeutet.

Die einzelnen Stufen bilden in der Queransicht der Figur 4 jeweils eine Schräge, die mit der rückseitigen Schräge 14 an den einzelnen Spleißmodulen 1 zusammenwirkt. Die beiden Schrägen fahren nämlich in der Schlussphase der Einschwenkbewegung aneinander und das entsprechende Spleißmodul 1 wird auf die richtige vertikale Position eingestellt.

Die vertikale Justage durch die Stufen 14 kann z. B. auch dazu genutzt werden, die Klinken 12 insoweit etwas tiefer anzubringen, als sie erst ab einer gewissen Biegeauslenkung der Spleißmodule 1 aus ihrer nominellen horizontalen Lage in Wirkung treten. Dann würden die Spleißmodule 1, wenn sie nicht besonders belastet werden, beim Einschwenken nicht gegen die Klinken 12 anlaufen, sondern von diesen nur im Belastungsfall gehalten.

Außerdem enthalten sie jeweils einen hier quadratischen Kanalabschnitt 15 für nicht eingezeichnete quer verlaufende LWL-Kabel, die entlang der Rückwand 13 von einer zur anderen Seite geführt sind. Die jeweils hinter bzw. unter den Schrägen der Stufen 14 liegenden Stützabschnitte dieser Stufen verlaufen horizontal und damit platzsparend.

Die bereits erwähnte mittlere Stufenreihe dient vorrangig zur Führung dieser Kabel und ist für die mechanische Stützfunktion der Spleißmodule 1 nicht unbedingt nötig, allerdings auch nicht nachteilig. Hier wird der Einfachheit halber ein analoges Bauteil verwendet.

Man kann sich anhand des Ausführungsbeispiels leicht vorstellen, dass z. B. statt der Schräge 14 an der Rückseite der Spleißmodule 1 auch Rollen angebracht sein könnten, die das Überschreiten der jeweiligen Klinke 12 und die Interaktion mit der jeweiligen Stufe 14 erleichtern. Auch könnte die schräge Fläche der Stufen 14 durch eine Rolle ersetzt sein, wobei dann etwas weniger Platz für die Kabelführung verbleiben würde. Da die Klinken 12 in einen Bereich zwischen den Spleißmodulen 1 ragen, an denen diese nicht durch eine schräge Ausgestaltung Raum schaffen, sind sie vorzugsweise als einfache flache Bleche gestaltet.

## Patentansprüche

1. Spleißmodulstapel mit einem Gehäuse (11) und übereinander entlang einer vertikalen Richtung in dem Gehäuse (11) gestapelten Spleißmodulen (1), die jeweils Spleißstellenablagen für LWL-Kabel aufweisen,
wobei die Spleißmodule (1) in dem Stapel jeweils um eine vertikale Schwenkachse (A) in das Gehäuse (11) hinein und aus dem Gehäuse (11) heraus ein- und ausschwenkbar sind, und zwar durch eine Vorderseite des Gehäuses (11),
und die Schwenkachse (A) seitlich an einer ersten Seite der Vorderseite des Gehäuses (11) angeordnet ist,
mit einer Klinke (12a-c), welche an einer zu der ersten Seite entgegengesetzten zweiten Seite innen an dem Gehäuse (11) angeordnet ist,
über welche Klinke (12a-c) eines der Spleißmodule (1) bei einem Einschwenken und einem Ausschwenken läuft und welche Klinke (12a-c) dieses Spleißmodul (1) dabei stützt,
sowie mit einer Schräge (14) oder einem Rollelement an einer im eingeschwenkten Zustand zu der Vorderseite entgegengesetzten Rückseite des von der Klinke (12a-c) gestützten Spleißmoduls (1) an einer Stelle, an der dieses Spleißmodul (1) beim Einschwenken gegen die Klinke (12a-c) läuft, welche Schräge (14) oder welches Rollelement zum Erleichtern dieses Auflaufens auf die Klinke (12a-c) vorgesehen ist,
wobei die Klinke (12a-c) in ihrem mit dem Spleißmodul (1) interagierenden Bereich flach und horizontal ausgestaltet ist.

2. Spleißmodulstapel nach Anspruch 1, bei dem das Gehäuse (11) zwischen den Spleißmodulen (1) offen ist.

3. Spleißmodulstapel nach Anspruch 1 oder 2, bei dem zumindest zwei vertikal benachbarte Klinken (12b,c) vorgesehen und paarweise als flaches U-Profil mit je einer Klinke (12b,c) als Schenkeln ausgestaltet sind.

4. Spleißmodulstapel nach einem der vorstehenden Ansprüche, bei dem an einer zu der Vorderseite entgegengesetzten Rückseite (13) des Gehäuses (11) innen eine Stufe (14a-d) angeordnet ist, gegen und auf welche Stufe das Spleißmodul (1) läuft, wenn dieses Spleißmodul (1) in die vollständig in dem Gehäuse (11) eingeschwenkte Position geschwenkt wird, und welche Stufe (14a-d) dieses Spleißmodul (1) dabei stützt.

5. Spleißmodulstapel nach Anspruch 4, bei dem an der Stufe (14a-d) eine Schräge oder ein Rollelement vorgesehen ist, um das Auflaufen auf die Stufe (14a-d) zu erleichtern.

6. Spleißmodulstapel nach Anspruch 4 oder 5, bei dem an einer im eingeschwenkten Zustand des Spleißmoduls (1) zu der Vorderseite entgegengesetzten Rückseite des Spleißmoduls (1) eine Schräge (14) oder ein Rollelement zum Erleichtern des Auflaufens auf die Stufe (14a-d) angebracht ist, wobei die Schräge (14) oder das Rollelement vorzugsweise einheitlich ausgestaltet ist mit der Schräge (14) bzw. dem Rollelement gemäß Anspruch 1.

7. Spleißmodulstapel nach einem der vorstehenden Ansprüche, zumindest Anspruch 4, bei dem die Stufe (14a-d) als LWL-Kabelführungseinrichtung für quer zu der vertikalen Richtung laufende LWL-Kabel ausgebildet ist.

8. Verteilerschrank mit zumindest einem Spleißmodulstapel nach einem der vorstehenden Ansprüche.

## Claims

1. Splice module stack comprising a housing (11) and splice modules (1) which are stacked above each other in the housing (11) along a vertical direction, each having splice point trays for fiber optic cables,
wherein the splice modules (1) in the stack are each pivotable into and out of the housing (11) about a vertical pivot axis (A), namely through a front side of the housing (11),
and the pivot axis (A) is arranged laterally on a first side of the front side of the housing (11),
comprising a latch (12a-c) which is arranged on the inside of the housing (11) on a second side opposite the first side,
via which latch (12a-c) one of the splice modules (1) runs during pivoting in and pivoting out and which latch (12a-c) supports this splice module (1), and comprising a slope (14) or a roller element on a rear side, opposite the front side in the pivoted-in state, of the splice module (1) supported by the latch (12a-c) at a point at which this splice module (1) runs against the latch (12a-c) during pivoting in, which slope (14) or which roller element is provided to facilitate this running onto the latch (12a-c),
wherein the latch (12a-c) is of flat and horizontal configuration in its region interacting with the splice module (1).

2. Splice module stack according to claim 1, in which the housing (11) is open between the splice modules (1).

3. Splice module stack according to claim 1 or 2, in which at least two vertically adjacent latches (12b,c) are provided and are configured in pairs as a flat U-profile with in each case one latch (12b,c) as limbs.

4. Splice module stack according to any one of the preceding claims, in which a step (14a-d) is arranged on the inside on a rear side (13) of the housing (11) opposite the front side, against and on which step the splice module (1) runs when this splice module (1) is pivoted into the position fully pivoted into the housing (11), and which step (14a-d) supports this splice module (1).

5. Splice module stack according to claim 4, in which a slope or a roller element is provided on the step (14a-d) in order to facilitate the running onto the step (14a-d).

6. Splice module stack according to claim 4 or 5, in which a slope (14) or a roller element is provided on a rear side of the splice module (1) opposite the front side in the pivoted-in state of the splice module (1) in order to facilitate the running onto the step (14a-d), wherein the slope (14) or the roller element is preferably of uniform configuration with the slope (14) or the roller element according to claim 1.

7. Splice module stack according to one of the preceding claims, at least claim 4, in which the step (14a-d) is configured as a fiber optic cable guide device for fiber optic cables running transversely to the vertical direction.

8. Distribution cabinet having at least one splice module stack according to one of the preceding claims.

## Revendications

1. Pile de modules d'épissure comprenant un boîtier (11) et des modules d'épissure (1) empilés les uns sur les autres le long d'une direction verticale dans le boîtier (11), lesquels présentent à chaque fois des emplacements d'épissure pour des câbles de fibre optique,
les modules d'épissure (1) pouvant pivoter dans la pile à chaque fois autour d'un axe de pivotement vertical (A) dans le boîtier (11) et hors du boîtier (11), et ce à travers un côté avant du boîtier (11),
et l'axe de pivotement (A) étant disposé latéralement sur un premier côté du côté avant du boîtier (11),
comprenant un loquet (12a-c) qui est disposé sur un deuxième côté opposé au premier côté à l'intérieur sur le boîtier (11),
par lequel loquet (12a-c) l'un des modules d'épissure (1) passe lors d'un pivotement rentrant et d'un pivotement sortant et lequel loquet (12a-c) supporte ce module d'épissure (1),
ainsi qu'comprenant un biseau/chanfrein (14) ou un élément roulant sur un côté arrière, opposé à l'état pivoté vers l'intérieur, du module d'épissure (1) supporté par le loquet (12a-c) à un emplacement auquel ce module d'épissure (1) passe lors du pivotement rentrant contre le loquet (12a-c), lequel biseau (14) ou lequel élément roulant est prévu pour faciliter cette montée sur le loquet (12a-c),
le loquet (12a-c) étant réalisé plat et horizontal dans sa région interagissant avec le module d'épissure (1).

2. Pile de modules d'épissure selon la revendication 1, dans laquelle le boîtier (11) est ouvert entre les modules d'épissure (1).

3. Pile de modules d'épissure selon la revendication 1 ou 2, dans laquelle au moins deux loquets (12b, c) adjacents verticalement sont prévus et sont réalisés par paires sous forme de profilé en U plat avec à chaque fois un loquet (12b, c) sous forme de branches.

4. Pile de modules d'épissure selon l'une quelconque des revendications précédentes, dans laquelle un gradin (14a-d) est disposé à l'intérieur sur un côté arrière (13), opposé au côté avant, du boîtier (11), contre et sur lequel gradin passe le module d'épissure (1) lorsque ce module d'épissure (1) est pivoté dans la position complètement pivotée vers l'intérieur dans le boîtier (11), et lequel gradin (14a-d) supporte ce module d'épissure (1).

5. Pile de modules d'épissure selon la revendication 4, dans laquelle un biseau ou un élément roulant est prévu sur le gradin (14a-d) pour faciliter la montée sur le gradin (14a-d).

6. Pile de modules d'épissure selon la revendication 4 ou 5, dans laquelle un biseau (14) ou un élément roulant pour faciliter la montée sur le gradin (14ad) est monté sur un côté arrière, opposé à l'état pivoté vers l'intérieur, du module d'épissure (1), du module d'épissure (1), le biseau (14) ou l'élément roulant étant réalisé de préférence de manière unitaire avec le biseau (14) ou l'élément roulant selon la revendication 1.

7. Pile de modules d'épissure selon l'une quelconque des revendications précédentes, au moins la revendication 4, dans laquelle le gradin (14a-d) est réalisé sous forme de dispositif de guidage de câbles de fibre optique pour des câbles de fibre optique s'étendant transversalement à la direction verticale.

8. Armoire de distribution comprenant au moins une pile de modules d'épissure selon l'une quelconque des revendications précédentes.
